# EUROPEAN PATENT APPLICATION

(11) **EP 1 737 242 A2**
(43) Date of publication of application: **27.12.2006**
(21) Application number: 06290986.6
(22) Date of filing: 16.06.2006
(51) Int. Cl.: H04N 7/26

(54) **Digital television signal, method of processing a digital television signal in a transmitter and a receiver, and receiver**

(30) Priority: 20.06.2005 KR 20050053223
(71) Applicant: LG Electronics Inc., Yongdungpo-gu Seoul (KR)
(72) Inventor: Yun, Chang Sik, Gunpo-si, Gyeonggi-do 435-010 (KR)
(74) Representative: Boire, Philippe Maxime Charles

(57) **Abstract**

A data structure, a digital television signal, a method of processing a digital television signal in a transmitter and a receiver, and a receiver are disclosed. A digital television signal for use in a digital television receiver for receiving program information from a broadcast transmitter, the digital television signal comprising an information table including a contents-type field indicating whether a type of contents of a program is advertisement.

Therefore, a contents-type field capable of discriminating between actual program content data and advertisement content data is applied to standard information indicating content program information, resulting in the elimination of advertisement process problems associated with digital broadcast content data.

## Description

This application claims the benefit of Korean Patent Application No.10-2005-0053223, filed on June 20, 2005, which is hereby incorporated by reference as if fully set forth herein.

### BACKGROUND OF THE INVENTION

### Field of the Invention

The present invention relates to an apparatus and method for transmitting/receiving digital television signal, and more particularly to a method and apparatus for transmitting/receiving a digital broadcast signal having a contents-type field capable of defining the type of content data, and a method and apparatus for transmitting/receiving a digital broadcast signal equipped with a contents-type field capable of discriminating between actual program content data and advertisement content data, resulting in the elimination of advertisement process problems.

### Discussion of the Related Art

Generally, a plurality of streams are multiplexed, and the multiplexed streams are transmitted to users via a variety of transmission mediums and networks, such that digital broadcast is implemented. A plurality of element streams form a single service. A single transport stream is formed by a plurality of services. The resultant stream is transmitted to a destination via a variety of networks and physical mediums.

A receiver searches for a desired stream desired by a viewer (i.e., a user) from among a plurality of streams, and receives the stream.

In order to provide the user with content data of individual programs received from each service and category information of the programs, specific information including not only a stream defined by MPEG-2 but also an additional function is transmitted. The above-mentioned additional function is referred to as "Service Information" or "Program Information".

The viewer (i.e., the user) can select a desired service or event (i.e., each program) from among bit streams using service information associated with the bit streams. The receiver can automatically select/receive the selected service. ISO/IEX 13818-1 program specific information (PSI) may be used as service information for the automatic-tuning of individual programs.

Not only information of services provided to viewers, but also information of individual programs provided to the viewers may be added to the program information. The program information may include not only information of a corresponding transmission network but also information of other transmission networks.

When a digital broadcast receiver receives broadcast content signals and displays the received broadcast content signals, the user must unconditionally view advertisement broadcast data transmitted from a broadcast station until a real broadcast program begins.

Also, if the user desires to re-view recorded digital content data, unexpected problems occur in a method for processing advertisement data contained in the recorded content data.

Typically, advertising enterprises or general broadcast stations may desire to provide the user with many more advertisement programs, however, the user may unconditionally view undesired advertisement broadcast programs, resulting in the occurrence of unnecessary time consumption.

Therefore, in order to solve the above-mentioned advertisement broadcast problems encountered between the advertising enterprises and users, there is a need for an advertisement-associated field to be contained in current digital broadcast standards.

### SUMMARY OF THE INVENTION

Accordingly, the present invention is directed to a digital television signal, a method of processing a digital television signal in a transmitter and a receiver, and a receiver that substantially obviate one or more problems due to limitations and disadvantages of the related art.

An object of the present invention is to provide a method and apparatus for transmitting/receiving a digital broadcast signal equipped with a contents-type field capable of discriminating between actual program contents data and advertisement contents data, thereby solving advertisement process problems.

Another object of the present invention is to provide a digital television signal for transmitting/receiving a digital broadcast signal, which includes the advertisement-associated standard in the information table such that it can provide a television signal available to process advertisement data recorded in a video display device.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, A digital television signal for use in a digital television receiver for receiving program information from a broadcast transmitter, the digital television signal comprising an information table including a contents-type field indicating whether a type of contents of a program is advertisement.

In another aspect of the present invention, there is provided a method of processing a digital television signal in a transmitter, the method comprising: a) inserting a contents-type field indicating whether a type of contents of a program is advertisement into an information table; and b) transmitting the information table.

In yet another aspect of the present invention, there is provided a method of processing a digital television signal in a digital television receiver, the method comprising: a) an information table including contents type information; b) parsing the information table, and extracting a contents-type field indicating whether a type of contents of a program is advertisement; and c) controlling a output according to the extracted contents-type field.

In yet another aspect of the present invention, there is provided a digital broadcast receiver comprising: a tuner for receiving a broadcast signal equipped with a contents-type field indicating whether a type of contents of a program is advertisement, a decoder for parsing the received broadcast signal, and extracting the contents-type field and a control unit for controlling its output according to a value prescribed in the extracted contents-type field.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 shows a syntax of a program map table according to the present invention;

FIG. 2 shows a syntax of a program map table including a contents-type field according to the present invention;

FIG. 3 shows a syntax of a virtual channel table according to the present invention;

FIG. 4 shows a syntax of a virtual channel table including a contents-type field according to the present invention;

FIG. 5 shows a syntax of a service description table according to the present invention;

FIG. 6 shows a syntax of a service description table including a contents-type field according to the present invention;

FIG. 7 exemplarily shows a contents-type field according to the present invention;

FIG. 8 is a block diagram illustrating a broadcast receiver according to the present invention; and

FIG. 9 is a block diagram illustrating a broadcast receiver according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Prior to describing the present invention, it should be noted that most terms disclosed in the present invention correspond to general terms well known in the art, but some terms have been selected by the applicant as necessary and will hereinafter be disclosed in the following description of the present invention. Therefore, it is preferable that the terms defined by the applicant be understood on the basis of their meanings in the present invention.

The present invention has an information table which includes a program information and an additional information. And the information table include an information about a video signal and an audio signal.

There are many tables about the information table. For example, there are a program map table (PMT) of Program Specific Information (PSI), a virtual channel table (VCT) of a Program and System Information Protocol (PSIP), and a service description table (SDT) of Service Information (SI) of a DVB.

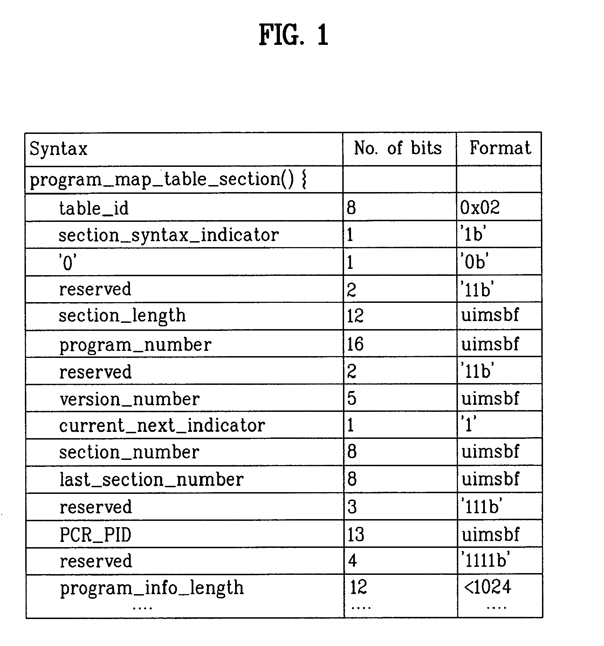

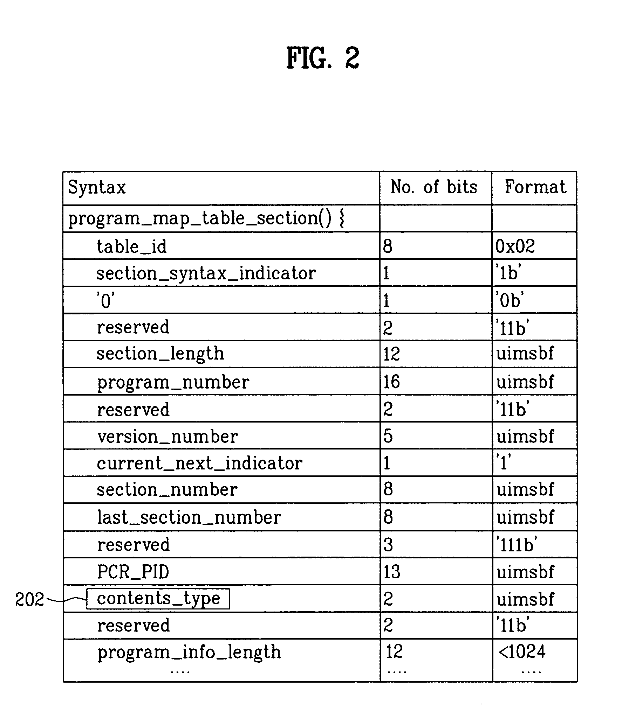

FIG. 1 shows a syntax of a program map table according to the present invention. FIG. 2 shows a syntax of a program map table including a contents-type field according to the present invention.

A data structure and a method for transmitting/receiving digital content data according to the present invention will hereinafter be described with reference to FIGS. 1 and 2.

Program Specific Information (PSI) prescribes service information of the MPEG-3 system layer.

The program specific information (PSI) includes specific information capable of demultiplexing/decoding a specific stream from among multiplexed streams. The program specific information (PSI) includes a Program Association Table (PAT), a Conditional Access Table (CAT), a Program Map Table (PMT), and a Network Information Table (NIT), etc.

The program association table (PAT) transmits not only Packet Identifier (PID) information of a corresponding PMT related to a variety of services of a transmission end, but also PID information of the NIT.

The conditional access table (CAT) transmits information of a pay-for-use broadcast system used in the transmission end. The pay-for-use broadcast system information transmitted from the CAT may be defined / used differently from content data transferred via a general pay-for-use broadcast system.

As shown in FIG. 1, the program map table (PMT) transmits not only PID information of a transmission transport packet capable of transmitting individual services and their categories, but also other PID information capable of transmitting PCR information.

The network information table (NIT) is defined in DVB standards so that it can be compatible with the MPEG-2 standard. Indeed, the network information table (NIT) transmits transmission network information.

Referring to FIG. 2, the program map table (PMT) for providing the user with additional functions of digital broadcast signals is indicative of a single virtual channel of a digital TV.

The program map table (PMT) acts as a table for loading program information capable of existing in each physical channel. The program map table (PMT) must receive a new program map table (PMT) within a predetermined time of 400ms according to the digital TV standards.

Accordingly, provided that the program map table (PMT) for loading the program information indicates that currently-broadcast digital content data is indicative of advertisement broadcast data, a method for processing the advertisement broadcast data can be effectively used.

Therefore, the present invention adds a contents-type field for indicating whether digital content data is indicative of advertisement broadcast data to the above-mentioned program map table (PMT). The contents-type field indicates whether a type of contents of a program is advertisement. And it indicates a type of a advertisement.

The program map table (PMT) maps a program recognized by the PAT mapping to PIDs of a real video ES, PIDs of an audio ES, and PIDs of a PCR stream, such that it allows a demultiplexer to receive video ES-, audio ES-, and PCR- information via a DSS packet. The program map table (PMT) performs double-authentication of a program number and PMI_PID information, such that it analyzes effectiveness of PMT information.

The method of Receiving the program map table (PMT) of Program Specific Information (PSI) further comprises the steps of receiving a table providing a pointer of at least one PMT transmitted within a transport stream, parsing the table, and extracting a packet identifier(ID) of the PMT and receiving each pointed PMT using the PMT packet ID.

The program_map_PID is a 13 bit field specifying the PID of the Transport Stream packets which shall contain the program_map_section applicable for the program as specified by the program_number. No program_number shall have more than one program_map_PID assignment. The value of the program_map_PID is defined by the user, but shall not take values reserved for other purposes.

The program map table (PMT) may be composed of a plurality of sections, and is transmitted to a plurality of transport packets. When a single section is transmitted via a plurality of transport packets, a corresponding packet transmits data equipped with a start part of the section. The corresponding packet sets the unit_start_indicator of 1 bit to "1", such that it indicates that the start part of the section is contained in a payload of the corresponding packet.

A 1-byte pointer field following a 4-byte transport header is used to indicate a start location of the above-mentioned section, such that it indicates where the section begin in the payload. A maximum length of each section other than an EIT having a limited variable length of 4096 bytes is limited to 1024 bytes. Each section includes the following fields.

The program map table (PMT) includes a table identifier (table_id), a program number, PCR_PID information, category information of each ES, a PID, and contents_type information, etc.

A detailed description of the above-mentioned program map table (PMT) will hereinafter be described.

"Table_id" information is composed of an 8-bit field, and indicates a table including a corresponding section. A value of the table_id information is prescribed by an ISO and an ETSI.

"Section_syntax_indicator" information is composed of a 1-bit field, is compatible with a PSI of the MPEG2 system standard, and is fixed to "1".

"Section_length" information is composed of a 12-bit field, and is used to indicate the length of a corresponding section. The length of the section is limited to 1024 bytes, such that upper 2-bits are fixed to "00". The section length indicates the size of data contained in a section following the "section_length" field.

"Program_number" information is composed of a 16-bit field, and is used to distinguish a corresponding service from other services in a transport stream. The program_number is the numeric label associated with a program. Program_number is a 16 bit field. It specifies the program to which the program_map_PID is applicable. If this is set to 0x0000 then the following PID reference shall be the network PID. For all other cases the value of this field is user defined. This field shall not take any single value more than once within one version of the program association table. The program_number may be used as a designation for a broadcast channel, for example

"Version number" information is composed of a 5-bit field. Content data of program- or service- information varies with time due to its attributes. In other words, if a specific program is broadcast to a viewer and a predetermined period of time elapses, there is a need to inform the viewer of content data of other programs other than the specific program, such that new-version service information must be transmitted to the viewer. In order to inform the viewer that current service- or program- information is different from previous service- or program- information, the above-mentioned "version_number" information is employed. The above-mentioned "version_number" information is transmitted to the viewer, and at the same time sequentially increases section "version_number" information of the aforementioned "table_id" information.

"Current_next_indicator" information is composed of a 1-bit field, and indicates whether transmission content data is indicative of first content data to be immediately applied to a current time or second content data to be applied to the next time. The "current_next_indicator" information provides a method for controlling a receiver to prepare for information to be changed to other information after the lapse of a predetermined period of time. If the value of the "current_next_indicator" information is set to "1", this means that a current PMT is valid and a program map table (PMT) having a valid version number value is indicative of a version value. If the value of the "current_next_indicator" information is set to "0", this means that the next PMT is valid and a program map table (PMT) having a valid version number value is indicative of a version value.

"Section_number" information is composed of an 8-bit field, and indicates a section number. The receiver can rearrange a plurality of received tables using the section number. If the "section_number" information does not have an objective for repeatedly transmitting a specific section, the section number of each section must be sequentially increased/transmitted.

"Last_section_number" information is composed of an 8-bit field, and indicates a section number of the last section of a current table.

"PCR_PID" information indicates a PID value of a DSS packet having an effective PCR used for a program designated by the program number. If a specific stream is not related to the PCR, all of the "PCR_PID" information must be set to a bit value of 1.

"Program_info_length" information indicates the number of bytes corresponding to the length of a descriptor following the "program_info_length" information.

"Contents_type" information is composed of a 2-bit field, and determines whether digital content data is real program content data or advertisement content data. In other words, it indicates a type of contents of a program is advertisement.

A PMT syntax includes a plurality of reserved fields. A contents-type field for indicating whether digital content data is equal to real broadcast data or advertisement broadcast data is added to the reserved fields.

As stated above, the contents-type field may be added to the reserved fields. For example, if the "contents_type" field is added to a reserved field following the "PCR_PID" field, a user can determine whether digital content data is advertisement content data or not.

If the contents-type data indicates that the contents type of a program is advertisement, the contents can be skipped. And accoding to a type of a advertisement, the user select whether or not the program is skipped. For example, if a type of an advertisement is foods, then the advertisement is skipped. And if a type of an advertisement is clothes, then it is not skipped. In other words, the user may classify advertisement content data into first advertisement content data to be viewed by the user or second advertisement content data not to be viewed by the user according to user's interests.

A method for indicating information of a current broadcast program may be represented in the form of the above-mentioned program map table (PMT) contained in the program specific information (PSI) shown in FIGS. 1~2, and may also be represented in the form of a virtual channel table (VCT) based on a PSIP (Program and System Information Protocol) standard acting as the North American digital broadcast standard.

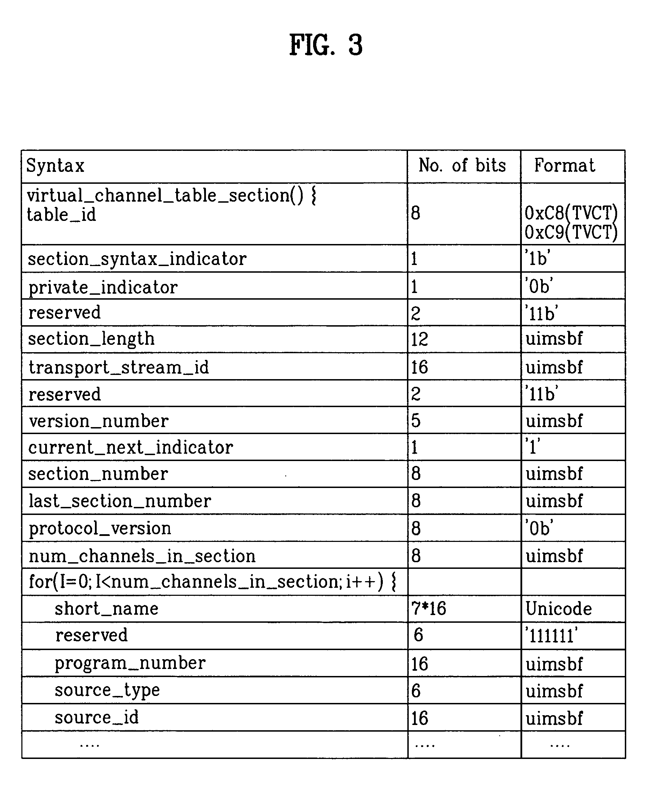

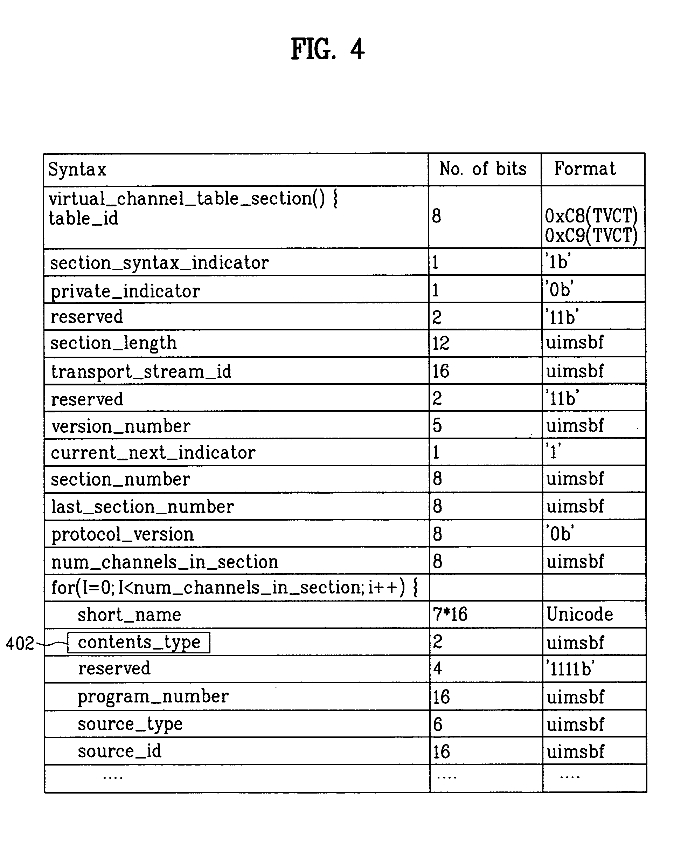

FIG. 3 shows a syntax of a virtual channel table of a PSIP according to the present invention. FIG. 4 shows a syntax of a virtual channel table including a contents-type field according to the present invention.

A second preferred embodiment of the present invention disclosing a data structure and a method for transmitting/receiving digital content data will hereinafter be described with reference to FIGS. 3 and 4.

PSIP includes six tables (i.e., STT, RRT, MGT, VCT, EIT, and ETT). The VCT (Virtual Channel Table) is indicative of a TVCT (Terrestrial VCT) or a CVCT (Cable VCT). The YVCT is indicative of program information of North American terrestrial digital broadcast data. The CVCT is indicative of program information of North American cable digital broadcast data.

The VCT includes information of several channels transmitted from physical terrestrial broadcast channels. The VCT transmits "source_id" information corresponding to a variety of information (i.e., a channel name, a category of a broadcast program of the channel, a channel-transmission modulation method, a frequency, and an individual broadcast program). Also, the receiver acquires program information by referring to a program information table "EIT-x" using the "source_id" information, such that it can inform the viewer of program information.

A detailed description of the above-mentioned VCT will hereinafter be described.

"program_number" is a 16-bit unsigned integer number that associates the virtual channel being defined here with the MPEG-2 PROGRAM ASSOCIATION and TS PROGRAM MAP tables. For virtual channels representing analog services, a value of 0xFFFF shall be specified for program_number. For inactive channels (those not currently present in the Transport Stream), program_number shall be set to zero. This number shall not be interpreted as pointing to a Program Map Table entry.

"service_type" is a 6-bit enumerated type field that shall identify the type of service carried in this virtual channel.

"source_id" is a 16-bit unsigned integer number that identifies the programming source associated with the virtual channel. In this context, a source is one specific source of video, text, data, or audio programming. Source ID value zero is reserved. Source ID values in the range 0x0001 to 0x0FFF shall be unique within the Transport Stream that carries the VCT, while values 0x1000 to 0xFFFF shall be unique at the regional level. Values for source_ids 0x1000 and above shall be issued and administered by a Registration Authority designated by the ATSC.

Referring to FIG. 4, the "contents_type" field capable of determining whether digital content data is indicative of advertisement content data is added to the TVCT/CVCT based on the PSIP standard, such that it can determine whether the digital content data is the advertisement content data. The "contents_type" field is inserted into the "reserved" field.

A method for indicating information of a current broadcast program may be represented in the form of the program map table (PMT) contained in the program specific information (PSI) shown in FIGS. 1-2 or the VCT information contained in the PSIP shown in FIGS. 3~4, and may also be represented in the form of a service description table (SDT) based on service information (SI) of a DVB acting as the European digital broadcast standard.

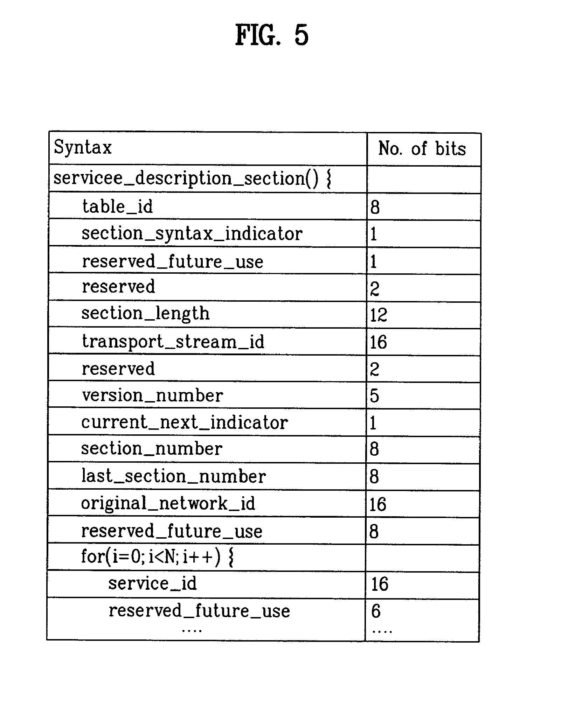

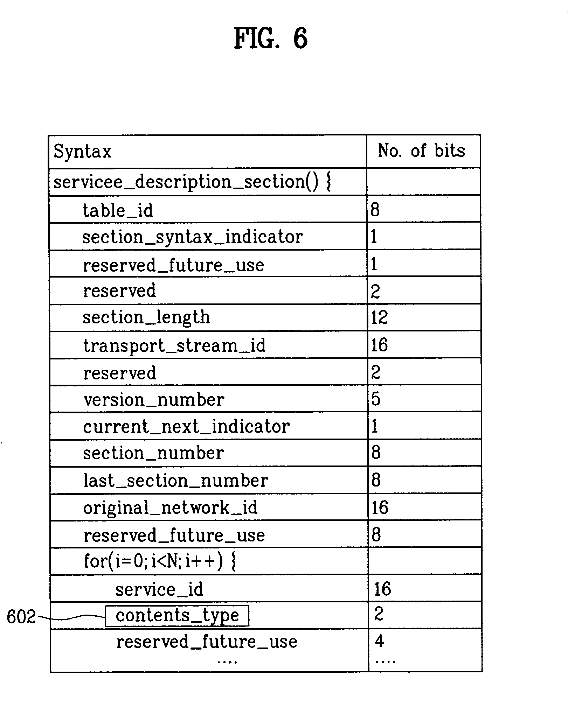

FIG. 5 shows a syntax of a service description table (SDT) contained in the SI (Service Information) of the DVB according to the present invention. FIG. 6 shows a syntax of a service description table (SDT) including a contents-type field according to the present invention.

A third preferred embodiment of the present invention disclosing a data structure and a method for transmitting/receiving digital content data will hereinafter be described with reference to FIGS. 5 and 6.

The service information table (SDT) from among tables of the service information (SI) of the DVB includes information of several channels transmitted from physical terrestrial broadcast channels.

Referring to FIG. 6, the "contents_type" field capable of determining whether digital content data is indicative of advertisement content data is added to an SDDT of SI (service information) of the DVB, such that it can determine whether the digital content data is the advertisement content data.

The above-mentioned "contents_type" field of FIGS. 2, 4, and 6 may be composed of 1-bit in order to determine whether digital content data is equal to advertisement content data. However, in order to not only distinguish advertisement content data from real program data, but also discriminate type information of the advertisement content data, the number of bits of the "reserved" field may be set to a limited value. Preferably, the number of bits of the "contents_type" field may be set to "2", so that 2 bits may designate the range of a value containable in the "contents_type" field.

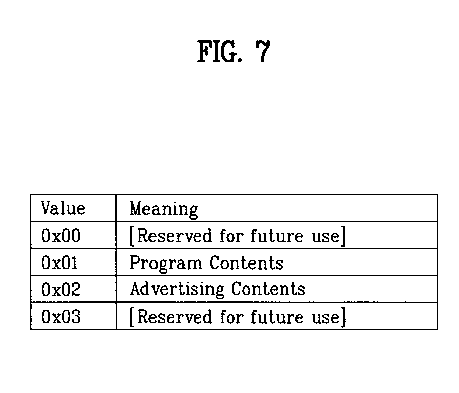

FIG. 7 exemplarily shows a contents-type field according to the present invention.

Referring to FIG. 7, the "contents_type" field is composed of 2 bits, and contents types are classified according to the value of the "contents_type" field. In other words, if the "contents_type" field is set to the value of "0", current data is determined to be reserved content data. If the "contents_type" field is set to the value of "1", current data is determined to be program content data. If the "contents_type" field is set to the value of "2", current data is determined to be advertisement content data. If the "contents_type" field is set to the value of "3", current data is determined to be reserved content data. In this case, bits of the reserved content data may be adapted to classify the types of the advertisement content data. In this way, if bits of the reserved "contents_type" field remain, the addition of data may be available in the future as necessary. For example, the user may classify advertisement content data into first advertisement content data to be viewed by the user or second advertisement content data not to be viewed by the user according to user's interests.

Therefore, the digital broadcast receiver inspects the "contents_type" field of broadcast content data transmitted from a broadcast station, such that it can determine whether the broadcast content data is equal to the advertisement content data or the program content data.

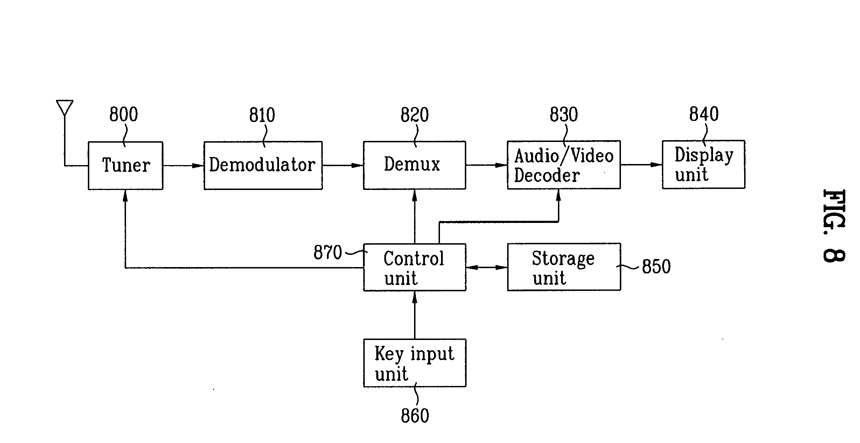

FIG. 8 is a block diagram illustrating a broadcast receiver capable of discriminating content types of digital broadcast signals according to the present invention.

Referring to FIG. 8, the broadcast receiver capable of discriminating content types of digital broadcast signals includes a tuner, a decoder, and a control unit. More particularly, the broadcast receiver includes a tuner 800, a demodulator 810, a demultiplexer (Demux) 820, an audio/video decoder 830, a display unit 840, a control unit 850, a storage unit 870, and a key input unit 860.

The tuner 800 performs tuning of a broadcast signal.

The demodulator 810 demodulates the signal tuned by the tuner 800, performs error correction of the tuned signal, and converts the error-corrected signal into a transport stream.

The demultiplexer (Demux) 820 performs demultiplexing of the time-multiplexed transport stream, such that it separates a video-signal stream, an audio-signal stream, and additional-information stream from the time-multiplexed transport stream.

The audio/video decoder 830 extends/recovers the video-signal stream and the audio-signal stream received from the demultiplexer 820.

The display unit 840 converts the audio signal generated from the audio/video decoder 830 into an analog audio signal, such that the analog audio signal can be outputted via a speaker. The display unit 840 converts the video signal generated from the audio/video decoder 830 into luminance and chrominance signals, such that it can display the video signal using the luminance and chrominance signals on the screen.

The storage unit 870 stores information program-associated information, detailed information, and recorded program information, etc.

The key input unit 860 receives a user command, and transmits the user command to the control unit 850. For example, the key input unit 860 may indicate a remote-controller, etc.

The control unit 850 controls operations of individual parts of a video display device. In other words, upon receiving a playback command of the recorded program from the key input unit 860, the control unit 850 determines whether corresponding content data includes advertisement content data.

The control unit 850 inspects the "contents_type" field inserted into the information table including program information (e.g., the program map table (PMT) of the corresponding content data), such that it determines whether content data is based on the advertisement standard. If the "contents_type" field is based on the advertisement standard, the control unit 850 determines that corresponding content data is equal to the advertisement content data, and skips over the advertisement content data, such that it controls only the program content data to be reproduced.

However, if current broadcast data is equal to the advertisement broadcast data during the real-time broadcast operation, it is impossible to immediately reproduce program content data after skipping over the advertisement broadcast data, different contents may be displayed according to user's selections. The user-selected content data may be displayed until reaching a specific time at which real program data begins to be displayed.

If the control unit 850 receives advertisement broadcast data when the user views the recorded program, it can select an FF command using the key input unit 570. Therefore, the control unit 850 skips over the advertisement content data using the "contents_type" field of the program map table (PMT), and then controls only the corresponding program to be reproduced.

And accoding to a type of a advertisement, the user select whether or not the program is skipped. For example, if a type of an advertisement is foods, then the advertisement is skipped. And if a type of an advertisement is clothes, then it is not skipped. In other words, the user may classify advertisement content data into first advertisement content data to be viewed by the user or second advertisement content data not to be viewed by the user according to user's interests.

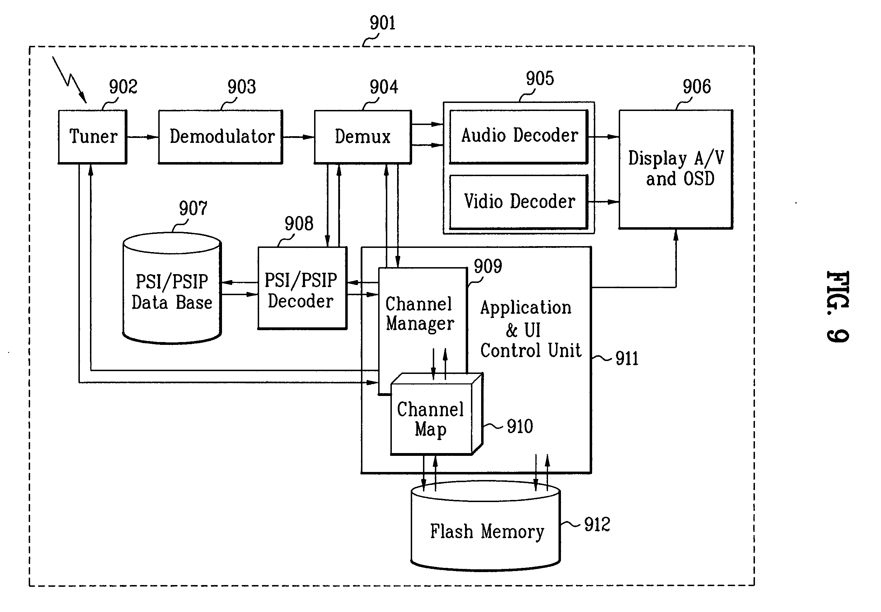

FIG. 9 is a block diagram illustrating a broadcast receiver according to the present invention. detailed descriptions of the decoder and the control unit of the broadcast receiver of FIG. 8 will hereinafter be described with reference to FIG. 9.

Referring to FIGS. 8 and 9, the decoder includes the demultiplexer (Demux) 904 and the PSI/PSIP decoder 908. In the case of the PSI, the decoder firstly receives the PAT, performs parsing of the PAT using the PSI decoder 908, such that it transmits the PMT PID to the demultiplexer (Demux) 904. The decoder controls the demultiplexer 904 to decode the PMT, such that the "contents_type" field is extracted.

The control unit 911 includes a channel manager 909 and a channel map 910, and controls an application and a User Interface (UI).

The channel manager 909 inspects the "contents_type" field, determines whether current content data is based on the advertisement standard, and controls the application.

The channel map 910 stores basic information associated channels.

The control unit 911 controls the UI according to a user command entered via the key input unit 913.

As apparent from the above description, the present invention applies a contents-type field capable of discriminating between actual program content data and advertisement content data to standard information indicating content program information, such that it can solve advertisement process problems associated with digital broadcast content data. In the case where broadcast data stored in a PVR or other personal storage units is reproduced, the present invention can be more effectively applied to the aforementioned case.

Also, the present invention includes the advertisement-associated standard in the SI standard, such that it can provide a data structure available to process advertisement data recorded in a video display device.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A digital television signal for use in a digital television receiver for receiving program information from a broadcast transmitter, the digital television signal comprising:
an information table including a contents-type field indicating whether a type of contents of a program is advertisement.

2. The digital television signal according to claim 1, wherein the information table is a program map table (PMT) of Program Specific Information (PSI).

3. The digital television signal according to claim 1, wherein the information table is a virtual channel table (VCT) of a Program and System Information Protocol (PSIP).

4. The digital television signal according to claim 3, wherein the virtual channel table (VCT) is a cable virtual channel table (CVCT) or a terrestrial virtual channel table (TVCT).

5. The digital television signal according to claim 1, wherein the information table is a service description table (SDT) of Service Information (SI) of a DVB.

6. The digital television signal according to claim 1, wherein the contents-type field indicates advertisement content data or program content data.

7. The digital television signal according to claim 1, wherein the contents-type field is added to a reserved field of the program information table.

8. The digital television signal according to claim 2, wherein the contents-type field is added to a reserved field following a PCR_PID field from among fields of the program map table (PMT) section format.

9. The digital television signal according to claim 1, wherein a value of the contents-type field is predetermined according to types of the contents.

10. The digital television signal according to claim 1, wherein the contents-type field includes 2 bits.

11. A method of processing a digital television signal in a transmitter, the method comprising:
a) inserting a contents-type field indicating whether a type of contents of a program is advertisement into an information table; and
b) transmitting the information table.

12. A method of processing a digital television signal in a digital television receiver, the method comprising:
a) receiving a broadcast signal including a broadcast program and an information table having contents type information;
b) parsing the information table, and extracting a contents-type field indicating whether a type of contents of a program is advertisement; and
c) controlling display of the broadcast program according to the extracted contents-type field.

13. The method according to claim 12, wherein the information table is a program map table (PMT) of Program Specific Information (PSI).

14. The method according to claim 13, further comprising the steps of:
d) receiving a table providing a pointer of at least one PMT transmitted within a transport stream;
e) parsing the table, and extracting a packet identifier(ID) of the PMT; and
f) receiving each pointed PMT using the PMT packet ID.

15. The method according to claim 12, wherein the information table is a virtual channel table (VCT) of a Program and System Information Protocol (PSIP) or a service description table (SDT) of Service Information (SI) of a DVB.

16. A digital broadcast receiver comprising:
a tuner for receiving a broadcast signal including a broadcast program and contents-type field indicating whether a type of contents of the broadcast program is advertisement;
a decoder for parsing the received broadcast signal, and extracting the contents-type field; and
a control unit for controlling display of the broadcast program according to a value prescribed in the extracted contents-type field.

17. The digital broadcast receiver according to claim 16, wherein the contents-type field indicates advertisement contents data or program contents data.

18. The digital broadcast receiver according to claim 16, further comprising:
a display unit for displaying broadcast contents data according to a control signal of the control unit.

19. The digital broadcast receiver according to claim 16, further comprising:
a key input unit for entering control information in the control unit.
